# FASCICULE DE BREVET EUROPEEN

(11) **EP 3 870 813 B1**
(45) Date de publication et mention de la délivrance du brevet: **17.06.2026**
(21) Numéro de dépôt: 19817391.6
(22) Date de dépôt: 22.10.2019
(51) Int. Cl.: F01D 15/10, F01D 25/12, F02C 7/36

(54) **TURBOMACHINE D'AÉRONEF ÉQUIPÉE D'UNE MACHINE ÉLECTRIQUE**
FLUGZEUGTURBOMASCHINE AUSGERÜSTET MIT EINER ELEKTRISCHEN MASCHINE
AIRCRAFT TURBOMACHINE EQUIPPED WITH AN ELECTRICAL MACHINE

(30) Priorité: 26.10.2018 FR 1859942
(43) Date de publication de la demande: 01.09.2021
(73) Titulaire: SAFRAN AIRCRAFT ENGINES, 75015 Paris (FR)
(72) Inventeur: CHARIER, Gilles, Alain, Marie, 77550 MOISSY-CRAMAYEL (FR); FRANTZ, Caroline, Marie, 77550 MOISSY-CRAMAYEL (FR); GUILLOTEL, Loïc, Paul, Yves, 77550 MOISSY-CRAMAYEL (FR); MILLIER, Vincent, François, Georges, 77550 MOISSY-CRAMAYEL (FR)
(74) Mandataire: Gevers & Orès
(86) Numéro de dépôt international: PCT/FR2019/052500
(87) Numéro de publication internationale: WO 2020/084241

(56) Documents cités:
- EP-A1- 1 382 802
- EP-A1- 3 569 845
- FR-A1- 2 922 265
- US-A- 3 264 482

## Description

### DOMAINE TECHNIQUE

La présente invention concerne une turbomachine d'aéronef équipée d'une machine électrique et un procédé d'assemblage correspondant.

### ETAT DE L'ART

L'état de l'art comprend notamment les documents FR-A1-2 842 565, FR-A1-2 922 265 et EP-A1-1 382 802 qui décrivent une turbomachine équipée d'une machine électrique.

Le monde aéronautique se pose aujourd'hui de nombreuses questions quant à la pertinence d'utiliser des moteurs hybrides pour l'aviation commerciale. L'utilisation de l'énergie électrique est aujourd'hui envisagée non seulement pour répondre à des fonctions de l'aéronef mais également pour électrifier des fonctions de la turbomachine.

Ce constat conduit à étudier des solutions d'architecture moteur hybridée, combinant l'énergie fossile du carburant et l'énergie électrique pour assurer l'entraînement de la partie propulsive (soufflante de la turbomachine) et l'alimentation de certaines fonctions moteurs et/ou aéronef.

Ces architectures peuvent notamment se baser sur une architecture de type à grand taux de dilution et à réducteur, mais aussi à multiple corps (2 ou 3). Dans ces architectures, la turbomachine comprend un corps basse pression et un corps haute pression, chaque corps comportant un arbre reliant un rotor d'un compresseur à un rotor d'une turbine.

Il est connu d'équiper une turbomachine d'aéronef avec une machine électrique. On rappelle qu'une machine électrique est un dispositif électromécanique basé sur l'électromagnétisme permettant la conversion d'énergie électrique par exemple en travail ou énergie mécanique. Ce processus est réversible et peut servir à produire de l'électricité.

Ainsi, suivant l'usage final d'une machine, on utilise les termes de :
- générateur pour désigner une machine électrique produisant de l'énergie électrique à partir d'une énergie mécanique,
- moteur pour une machine électrique produisant une énergie mécanique à partir d'une énergie électrique.

Une machine électrique peut également se comporter en mode moteur comme en mode générateur.

L'intégration d'une machine électrique de forte puissance sur le corps basse pression d'une turbomachine, en particulier de type à grand taux de dilution, s'avère très complexe. Plusieurs zones d'installation sont possibles mais les avantages et les inconvénients de chacune sont nombreux et divers (problème d'intégration mécanique de la machine, tenue en température de la machine, accessibilité de la machine, etc.).

Un des problèmes majeurs de l'intégration d'une machine électrique dans une turbomachine est d'avoir un environnement capable d'accepter la température limitée des composants de celle-ci (environ 150°C). De plus, le rendement global de la machine étant forcement inférieur à 100%, la chaleur dégagée par les pertes doit être évacuée. Sur des tailles de machine de plus de 1MW, la puissance dissipée est alors importante (50KW mini). Une solution consisterait à refroidir le stator de la machine avec de l'huile. Cependant, si la machine se trouve dans une enceinte huile, celle-ci peut alors directement fuir dans l'enceinte avec des risques de pollution par des particules issues de la machine. Si la machine est dans un environnement sec, le circuit de refroidissement doit dans ce cas être étanche et il faut alors être capable de récupérer les éventuelles fuites. Le refroidissement à l'huile présente donc des inconvénients.

La présente invention propose une solution à au moins une partie des problèmes évoqués dans ce qui précède.

### EXPOSE DE L'INVENTION

L'invention propose une turbomachine d'aéronef, comportant un générateur de gaz et une soufflante disposée en amont du générateur de gaz et configurée pour générer un flux principal de gaz dont une partie s'écoule dans une veine du générateur de gaz pour former un flux primaire, et dont une autre partie s'écoule dans une veine autour du générateur de gaz pour former un flux secondaire, le générateur de gaz comportant un corps basse pression qui comprend un rotor entraînant la soufflante, par l'intermédiaire d'un réducteur, la turbomachine comportant en outre une machine électrique, caractérisée en ce que la machine électrique est montée coaxialement en aval du réducteur et en amont d'un carter intermédiaire et comprend un rotor entraîné en rotation par le rotor du corps basse pression, et un stator s'étendant autour du rotor de la machine électrique, ce stator étant entouré par une première virole annulaire qui est elle-même entourée par une seconde virole annulaire, ces première et seconde viroles délimitant entre elles une portion de ladite veine d'écoulement du flux primaire, et la première virole annulaire étant configurée pour refroidir par conduction ledit stator du fait de son balayage par le flux primaire.

La présente invention propose ainsi une solution d'intégration d'une machine électrique, un premier avantage étant lié au fait que, dans la zone d'intégration de cette machine, les températures qui y règnent sont relativement faibles et donc optimales pour cette machine. Par ailleurs, la machine est refroidie par le flux primaire, ce qui optimise la durée de vie de la machine. La machine électrique est de préférence située en dehors de toute enceinte d'huile de lubrification d'un palier, de façon à ne pas avoir de risque de pollution par l'huile de cette machine.

La turbomachine selon l'invention peut comprendre une ou plusieurs des caractéristiques suivantes, prises isolément les unes des autres ou en combinaison les unes avec les autres :
- la machine électrique est située en amont d'un compresseur basse pression du corps basse pression,
- la machine électrique est située en aval d'un compresseur basse pression du corps basse pression,
- la turbomachine comprend un carter d'entrée qui entoure le réducteur et qui est situé en amont de la machine électrique,
- ladite première virole a une extrémité aval fixée ou reliée à des moyens de guidage en rotation d'une rangée annulaire d'aubes à calage variable du compresseur basse pression,
- la première virole a une surface annulaire radialement externe qui a un profil aérodynamique et qui est balayée par le flux primaire,
- le stator est fixé à un premier support annulaire de palier qui s'étend au moins en partie radialement à l'intérieur du stator et qui définit avec ce dernier un espace annulaire de montage du rotor,
- le rotor est fixé ou est relié à la périphérie externe d'un organe annulaire à section axiale de forme générale en T ou C, cet organe comportant une périphérie interne qui est accouplé au rotor du corps basse pression par un arbre intermédiaire traversant axialement la machine électrique, au moins un palier étant monté entre ledit premier support de palier et la périphérie interne de l'organe, ou entre ledit premier support de palier et l'arbre intermédiaire,
- la périphérie interne de l'organe est serrée axialement contre un tourillon du rotor du corps basse pression, l'organe et le tourillon étant montés de manière adjacente sur ledit arbre intermédiaire qui est guidé par au moins deux paliers dont le palier porté par ledit premier support de palier, ainsi qu'un autre palier porté par un second support annulaire de palier fixé à un carter,
- le générateur de gaz comporte un corps basse pression qui comprend un rotor entraînant la soufflante par l'intermédiaire d'un réducteur mécanique et qui comprend un compresseur basse pression situé en amont d'un carter intermédiaire, la turbomachine comportant en outre une machine électrique,
- la machine électrique est montée coaxialement en aval du réducteur et en amont du carter intermédiaire.

La présente invention concerne encore un procédé d'assemblage modulaire d'une turbomachine telle que décrite ci-dessus, comprenant au moins une étape de montage d'un premier module comportant plusieurs éléments assemblés, sur un second module. Ce procédé peut comprendre les étapes consistant à :
(a) assembler la machine électrique, le premier support de palier et ledit organe, et
(b) monter cet assemblage et ledit tourillon sur ledit arbre intermédiaire.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en coupe axiale d'une turbomachine d'aéronef à fort taux de dilution et réducteur ;
- la figure 2 est une demi vue schématique partielle en coupe axiale d'une turbomachine d'aéronef selon l'invention équipée d'une machine électrique ;
- la figure 3 est une vue à plus grande échelle d'un détail de la figure 2 ;
- la figure 4 est une vue schématique partielle en coupe axiale de la machine électrique et de la turbomachine de la figure 2, et illustre des étapes d'un procédé d'assemblage selon l'invention, et
- la figure 5 est une demi vue schématique partielle en coupe axiale d'une turbomachine d'aéronef selon une variante de réalisation de l'invention.

### DESCRIPTION DETAILLEE

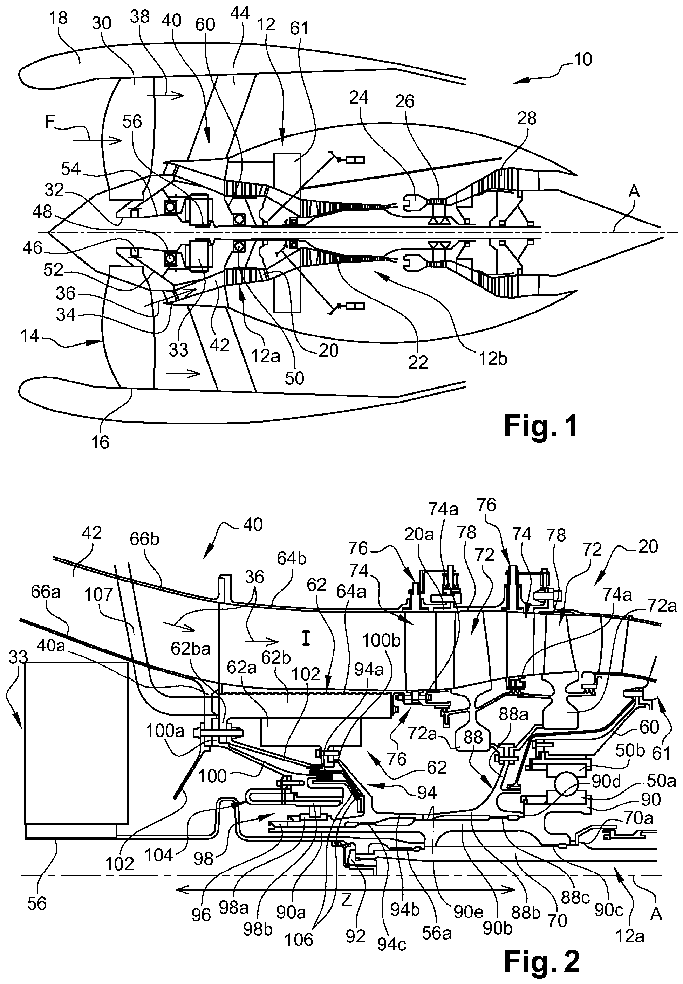

On se réfère d'abord à la figure 1 qui représente schématiquement une turbomachine 10 d'aéronef à double corps et double flux.

La turbomachine 10 comporte de façon classique un générateur de gaz 12 à l'amont duquel est disposée une soufflante 14. La soufflante 14 est entourée par un carter de soufflante 16 qui est entouré par une nacelle 18 qui s'étend autour et le long d'une majeure partie du générateur de gaz 12.

Le générateur de gaz 12 comprend ici deux corps, à savoir un corps basse pression 12a ou BP et un corps haute pression 12b ou HP. Chaque corps comprend un compresseur et une turbine.

Les termes « amont » et « aval » sont considérés selon une direction principale F d'écoulement des gaz dans la turbomachine 10, cette direction F étant parallèle à l'axe longitudinal A de la turbomachine.

De l'amont vers l'aval, le générateur de gaz 12 comprend un compresseur basse pression 20, un compresseur haute pression 22, une chambre de combustion 24, une turbine haute pression 26 et une turbine basse pression 28.

Les compresseurs basse pression 20 et haute pression 22 sont séparés l'un de l'autre par un carter intermédiaire 61.

La soufflante 14 comprend une rangée annulaire d'aubes 30 entraînée en rotation par un arbre de soufflante 32 qui est relié au rotor du corps basse pression 12a par l'intermédiaire d'un réducteur 33. Le flux de gaz qui traverse la soufflante (flèche F) est séparé à l'amont du générateur de gaz 12 par un bec annulaire 34 en un flux annulaire radialement interne, appelé flux primaire 36 qui alimente le générateur de gaz 12, et en un flux annulaire radialement externe, appelé flux secondaire 38 qui s'écoule entre le générateur de gaz 12 et la nacelle 18 et fournit la majeure partie de la poussée de la turbomachine.

Un carter d'entrée 40 relie structurellement le générateur de gaz 12 au carter de soufflante 16 et à la nacelle 18. Comme c'est le cas du carter intermédiaire 61, le carter d'entrée 40 comprend une rangée annulaire de bras 42 radialement internes s'étendant dans le flux primaire 36, et une rangée annulaire d'aubes redresseurs 44 (du type OGV) radialement externes s'étendant dans le flux secondaire 38. Les bras 42 sont en général en nombre limités (moins de dix) et sont tubulaires et traversés par des servitudes. Le nombre d'aubes 44 (OGV) est en général supérieur à dix.

Le rotor du corps basse pression 12a ainsi que l'arbre de soufflante 32 sont guidés à l'amont par des paliers 46, 48 et 50. Ces paliers 46, 48, 50 sont du type à billes ou à rouleaux et comprennent chacun une bague interne montée sur l'arbre à guider, une bague externe portée par un support annulaire de paliers et un roulement entre les bagues.

De façon connue, le réducteur 33 est du type à train épicycloïdal et comprend un solaire centré sur l'axe A, une couronne s'étendant autour de l'axe et des satellites qui engrènent avec le solaire et la couronne et sont portés par un porte-satellites.

Dans l'exemple représenté, la couronne 33b est fixe et reliée fixement à un support 52 des paliers 46, 48. Le porte-satellites est tournant et relié à un arbre de sortie 54 du réducteur qui comprend en outre un arbre d'entrée 56 engrené avec le solaire. L'arbre d'entrée 56 est accouplé à l'arbre principal 70 du corps basse pression, et l'arbre de sortie 54 est accouplé avec l'arbre de soufflante 32.

L'arbre d'entrée 56 est guidé par le palier 50 qui est porté par un support de palier 60 (figure 1). L'arbre de sortie 54 est guidé par les paliers 46, 48.

Les supports de paliers 52, 60 s'étendent autour de l'axe A et sont des pièces fixes reliées au stator et par exemple au carter d'entrée 40.

La figure 2 est une vue à plus grande échelle d'une partie d'une turbomachine et illustre une zone d'installation d'une machine électrique 62, cette zone Z étant ici située en aval du réducteur 33 et en amont du carter intermédiaire 61.

Cette zone Z de forme annulaire est délimitée radialement à l'intérieur par l'arbre 70 principal du corps basse pression 12a ainsi que par l'arbre d'entrée 56 du réducteur 33, et radialement à l'extérieur par les éléments qui délimitent intérieurement la veine I d'écoulement du flux primaire 36. Ces éléments comprennent, d'amont en aval, une paroi annulaire interne 66a, une virole annulaire 64a, puis les disques 72a des roues 72 et les plateformes internes 74a des redresseurs aubagés 74 du compresseur basse pression 20.

La paroi 66a entoure le réducteur 33 et fait partie du carter d'entrée 40 car elle est reliée aux extrémités radialement internes des bras 42 dont les extrémités radialement externes sont reliées à une autre paroi annulaire externe 66b. La virole 64a s'étend autour de la machine électrique 62 et dans le prolongement de la paroi 66a.

La virole 64a est une virole interne et est entourée par une virole externe 64b, les viroles 64a, 64b définissant entre elles une portion de la veine I d'écoulement du flux primaire 36 en aval du carter d'entrée 40 et en amont du compresseur basse pression 20 et du carter intermédiaire 61. La virole 64b s'étend depuis l'extrémité aval de la paroi 66b jusqu'à une paroi 20a qui entoure les roues 72 et les redresseurs 74 du compresseur basse pression 20. La virole 64b peut être reliée ou formée d'une seule pièce avec cette paroi 20a.

Classiquement, cette paroi 20a comprend d'une part des moyens 76 de guidage en rotation et de calage variable des aubes des redresseurs 74 autours d'axes sensiblement radiaux, et des revêtements annulaires abradables 78 entourant les roues 72.

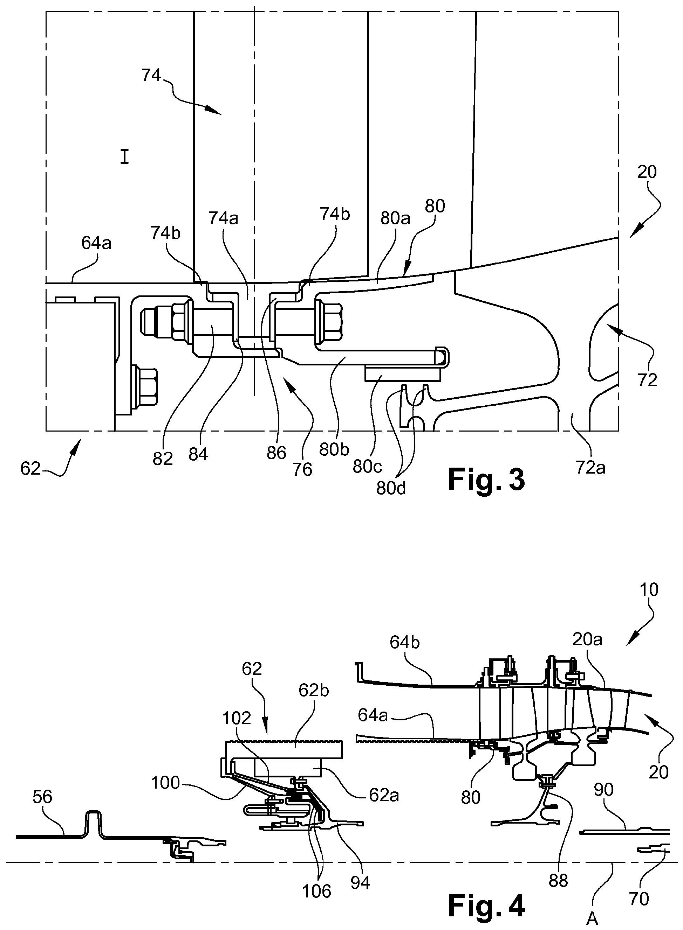

La virole 64a a son extrémité aval qui est également reliée ou fixée à des moyens 76 de guidage en rotation des aubes de redresseurs 74 autour des mêmes axes. Comme cela est mieux visible à la figure 3, un anneau 80 est rapporté et fixé à l'extrémité aval de la virole 64a par une série annulaire de vis 82 s'étendant sensiblement axialement. La virole 64a et l'anneau 80 forment une des plateformes 74a précitées et définissent entre eux des logements cylindriques 84 orientés radialement de réception et de guidage de pivots cylindriques 74b radialement internes des aubes de redresseurs 74. Le pivot de chaque aube peut être guidé dans ce logement 84 par une douille cylindrique 86 qui peut être maintenue radialement dans le logement par l'intermédiaire des vis 82 par exemple.

L'anneau 80 a en section axiale une forme générale en C dont l'ouverture est orientée axialement. Cet anneau 80 comprend un rebord périphérique externe 80a sensiblement cylindrique qui s'étend dans le prolongement de la virole 64a et définit intérieurement la veine I, et un rebord périphérique interne 80b sensiblement cylindrique qui porte un revêtement annulaire 80c en matériau abradable destiné à coopérer avec des léchettes 80d portées par le disque 72a de la roue amont du compresseur 20.

Les disques 72a des roues 72 du compresseur 20 sont fixés à un tourillon 88 qui est entraîné par l'arbre 70 par l'intermédiaire d'un arbre intermédiaire 90 (figure 2).

Le tourillon 88 a une forme annulaire et présente en section axiale une forme générale en T. Le tourillon 88 comprend une branche annulaire radiale 88a dont la périphérie interne est reliée à une branche cylindrique 88b. La périphérie externe de la branche radiale 88a est fixée par des vis à des brides des disques 72a des roues 72, et la branche cylindrique 88b comprend des cannelures internes 88c d'accouplement à des cannelures externes de l'arbre intermédiaire 90.

L'arbre intermédiaire 90 a une forme générale tubulaire et comprend un tronçon amont 90a et un tronçon aval 90b. Le tourillon 88 est monté sur le tronçon aval 90b de l'arbre intermédiaire 90, ce tronçon aval 90b comportant des cannelures internes 90c d'accouplement à des cannelures externes de l'arbre principal 70, ainsi qu'un épaulement cylindrique 90d d'appui axial vers l'aval du tourillon 88 et en particulier de l'extrémité aval de sa branche cylindrique 88b. L'arbre intermédiaire 90 peut en outre comprendre une surface cylindrique externe 90e de centrage de la branche 88b et donc du tourillon 88.

Le tronçon amont 90a de l'arbre intermédiaire 90 s'étend autour de l'extrémité aval de l'arbre d'entrée 56 du réducteur 33. Cet arbre d'entrée 56 comprend des cannelures internes 56a d'accouplement avec des cannelures externes de l'arbre principal 70. Par ailleurs, un écrou 92 est serré axialement à l'extrémité amont de l'arbre principal 70 et prend appui axialement sur l'arbre d'entrée 56 pour le serrer axialement contre l'arbre intermédiaire 90 qui prend lui-même appui axialement sur un épaulement cylindrique 70a de l'arbre principal 70.

À son extrémité aval, l'arbre intermédiaire 90 porte la bague interne 50a du palier 50, ici à billes, dont la bague externe 50b est portée par le support de palier 60. Ce support 60 a une forme générale tronconique et est évasé axialement vers l'aval. Son extrémité aval de plus grand diamètre est fixée au carter intermédiaire 61.

Ce type de palier 50 est classiquement lubrifié et est situé dans une enceinte annulaire de lubrification qui est rendue étanche pour éviter toute fuite d'huile en particulier vers l'amont, dans la zone Z d'implantation de la machine électrique 62.

La machine 62 a une forme générale annulaire et comprend un rotor 62a et un stator 62b qui entoure le rotor 62a. Le rotor 62a a une forme générale cylindrique s'étendant autour de l'axe A et est fixé à un organe annulaire 94 s'étendant également autour de l'axe A.

L'organe 94 présente en section axiale une forme générale en T. L'organe 94 comprend une branche annulaire radiale 94a dont la périphérie interne est reliée à une branche cylindrique 94b. La périphérie externe de la branche radiale 94a est fixée par des vis au rotor 62a, et la branche cylindrique 94b comprend des cannelures internes 94c d'accouplement à des cannelures externes de l'arbre intermédiaire 90, et en particulier de son tronçon amont 90a.

L'extrémité aval de la branche cylindrique 94b est d'une part en appui axial sur l'extrémité amont de la branche cylindrique 88b du tourillon 88, et coopère d'autre part avec la surface cylindrique 90e de centrage portée par l'arbre intermédiaire 90.

Un écrou 96 est serré axialement à l'extrémité amont de l'arbre intermédiaire 90 et prend appui axialement sur l'organe 94 pour le solliciter axialement contre le tourillon 88.

À son extrémité amont, la branche cylindrique 94b de l'organe 94 porte une bague interne 98a d'un palier 98, ici à rouleaux, dont la bague externe 98b est portée par un autre support annulaire de palier 100. Ce support 100 a une forme générale tronconique et est évasé axialement vers l'amont. Son extrémité amont de plus grand diamètre est fixée au stator 62b de la machine électrique 62.

Le stator 62b a également une forme générale cylindrique. Il comprend à son extrémité amont une bride annulaire radialement interne de fixation de plusieurs brides dont une 100a du support de palier 100. La bride 62ba du stator 62b est également fixée à une bride 40a du carter d'entrée 40, ainsi qu'à des brides de capots 102 d'étanchéité et/ou de déflecteurs.

La périphérie interne du support de palier 100 peut être équipée d'un système d'amortissement 104 à film d'huile, connu sous l'appellation anglo-saxonne *squeeze-film.* Elle peut en outre comprendre un rebord cylindrique 100b orienté vers l'aval et comportant un revêtement annulaire interne en matériau abradable.

Deux capots annulaires d'étanchéité 106 peuvent être fixés à l'organe 94 et en particulier à sa branche radiale 94a, et porter des léchettes annulaires radialement externes destinées à coopérer d'une part avec le revêtement porté par le rebord 100b, ainsi qu'avec un revêtement similaire porté par l'un des capots 102 fixés à la bride 62ba du stator 62b.

Le palier 98 est classiquement lubrifié et est situé dans une enceinte annulaire de lubrification qui est rendue étanche pour éviter toute fuite d'huile en particulier vers l'aval, dans la zone Z d'implantation de la machine électrique 62.

Le stator 62b est relié par un câble électrique 107 à un circuit de commande, ce câble 107 passant ici à travers un bras tubulaire 42 du carter d'entrée 40.

Une des particularités de cette installation réside dans le fait que la machine électrique 62 et en particulier son stator 62b est situé au plus prés du flux primaire 36. Ceci permet d'une part de disposer d'une machine électrique 62 à grand diamètre et donc à puissance potentielle supérieure aux technologies proposées jusqu'ici, et d'une machine qui est refroidie par le flux primaire 36. Dans un cas particulier de réalisation de l'invention, 30KW pourraient être dissipés par ce refroidissement.

Pour cela, la virole 64 qui s'étend, de préférence directement, autour du stator 62b, a sa surface radialement externe qui est balayée par le flux 36 et qui peut de plus avoir un profil aérodynamique, comme représenté dans le dessin. La virole 64a assure l'échange de calories par conduction thermique entre le stator 62b et le flux 36.

L'idée est d'avoir une virole 64a qui fait l'interface thermique entre l'air de la veine primaire et le stator 62b de la machine électrique 62. Le stator de la machine électrique est composé d'enroulement qu'il faut caréner pour les protéger de son environnement. Ici, on se propose de communaliser la carcasse de protection mécanique du carter avec une fonction aérodynamique de la turbomachine et éventuellement avec une fonction de support du redresseur situé en aval.

La figure 4 illustre des étapes de montage de la turbomachine 10 et en particulier de modules de cette turbomachine.

Une première étape illustrée à la figure 4 consiste à assembler la machine 62, c'est-à-dire à insérer le rotor 62a dans le stator 62b, en fixant au préalable le support de palier 100 au stator 62b, et l'organe 94 au rotor 62a. Les capots 102, 106 peuvent également être fixés à cet assemblage.

La virole 64a peut alors être montée autour de la machine 62 et le module ainsi formé peut être fixé au compresseur 20, notamment en fixant l'extrémité aval de la virole 64a à l'anneau 80. La virole 64b est déjà prémontée sur la paroi 20a du compresseur 20, ou formée d'une seule pièce avec cette paroi 20a.

Dans le cas où la virole 64b serait formée d'une seule pièce avec la paroi 20a, une partie du carter externe de compresseur basse pression 20 s'étend donc sans carter interne de compresseur en vis-à-vis, qui est remplacé par la virole 64a de carénage de la machine électrique.

La machine 62 et le compresseur 20 peuvent ensuite être engagés sur l'arbre intermédiaire 90 qui est préalablement monté sur l'arbre principal 70 ou monté par la suite sur cet arbre principal 70. Le tourillon 88 du compresseur 20 est accouplé avec l'arbre intermédiaire 90 puis l'organe 94 est accouplé avec cet arbre intermédiaire et prend appui axialement sur le tourillon 88. L'écrou 96 serre l'organe 94 et le tourillon 88 contre l'épaulement 90d de l'arbre intermédiaire.

L'arbre d'entrée 56 du réducteur 33 est ensuite engagé par translation axiale depuis l'amont vers l'aval entre l'arbre 70 et l'arbre intermédiaire 90. L'arbre d'entrée 56 est accouplé avec l'arbre principal 70 et l'écrou 96 est serré pour bloquer axialement l'arbre d'entrée 56 ainsi que l'arbre intermédiaire 90 sur l'arbre principal 70.

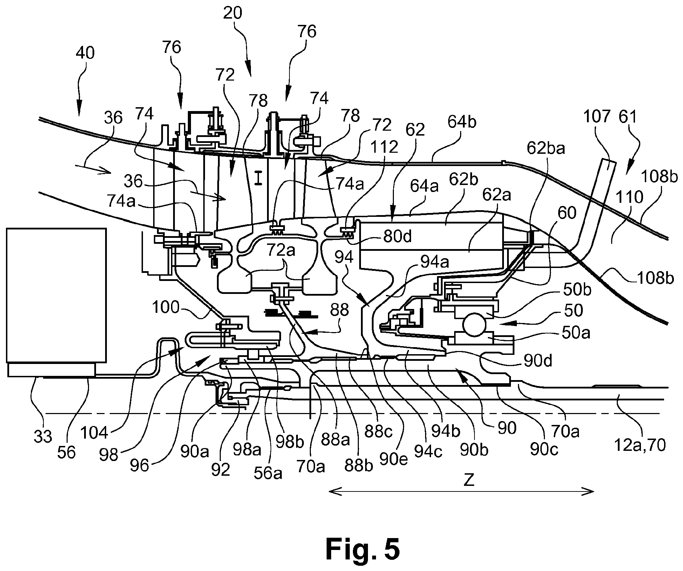

La figure 5 illustre une variante de réalisation d'une turbomachine selon l'invention.

Les éléments décrits dans ce qui précède et qui se retrouvent dans cette variante de réalisation sont désignés par les mêmes références.

La zone Z d'implantation de la machine électrique 62 est ici située en aval du réducteur 33 et du compresseur 20, et en amont du carter intermédiaire 61.

Cette zone Z de forme annulaire est délimitée radialement à l'intérieur par l'arbre 70 principal du corps basse pression 12a ainsi que par l'arbre d'entrée 56 du réducteur 33, et radialement à l'extérieur par les éléments qui délimitent intérieurement la veine I d'écoulement du flux primaire 36. Ces éléments comprennent ici, d'amont en aval, les disques 72a des roues 72 et les plateformes internes 74a des redresseurs aubagés 74 du compresseur basse pression 20, la virole annulaire 64a, puis une paroi annulaire interne 108a.

La paroi 108a fait partie du carter intermédiaire car elle est reliée aux extrémités radialement internes de bras 110 dont les extrémités radialement externes sont reliées à une autre paroi annulaire externe 108b. La virole 64a s'étend autour de la machine électrique 62 et dans le prolongement des disques 72a des roues 72 et des plateformes internes 74a des redresseurs aubagés 74 du compresseur 20.

La virole 64a est une virole interne et est entourée par une virole externe 64b, les viroles 64a, 64b définissant entre elles une portion de la veine I d'écoulement du flux primaire 36 en aval du compresseur basse pression 20 et en amont du carter intermédiaire 61. La virole 64b s'étend depuis l'extrémité aval de la paroi 20a jusqu'à une paroi annulaire externe 108b qui est reliée aux extrémités radialement externe des bras 110 et fait donc partie du carter intermédiaire 61. La virole 64b peut être reliée ou formée d'une seule pièce avec la paroi 20a.

Classiquement, cette paroi 20a comprend d'une part des moyens 76 de guidage en rotation et de calage variable des aubes des redresseurs 74 autours d'axes sensiblement radiaux, et des revêtements annulaires abradables 78 entourant les roues 72.

La virole 64a comprend à son extrémité amont un rebord cylindrique 112 orienté vers l'amont et portant un revêtement annulaire en matériau abradable destiné à coopérer avec des léchettes 80d portées par le disque 72a de la roue aval du compresseur 20.

Les disques 72a des roues 72 du compresseur 20 sont fixés à un tourillon 88 qui est entraîné par l'arbre 70 par l'intermédiaire d'un arbre intermédiaire 90.

Le tourillon 88 a une forme annulaire et présente en section axiale une forme générale en T. Le tourillon 88 comprend une branche annulaire radiale 88a dont la périphérie interne est reliée à une branche cylindrique 88b. La périphérie externe de la branche radiale 88a est fixée par des vis à des brides des disques 72a des roues 72, et la branche cylindrique 88b comprend des cannelures internes 88c d'accouplement à des cannelures externes de l'arbre intermédiaire 90.

L'arbre intermédiaire 90 a une forme générale tubulaire et comprend un tronçon amont 90a et un tronçon aval 90b. Le tourillon 88 est monté sur le tronçon amont 90a de l'arbre intermédiaire 90, l'arbre 90 comportant des cannelures internes 90c d'accouplement à des cannelures externes de l'arbre principal 70. L'arbre intermédiaire 90 peut en outre comprendre une surface cylindrique externe 90e de centrage de la branche 88b et donc du tourillon 88.

L'arbre d'entrée 56 du réducteur 33 comprend des cannelures internes 56a d'accouplement avec des cannelures externes de l'arbre principal 70. Par ailleurs, un écrou 92 est serré axialement à l'extrémité amont de l'arbre principal 70 et prend appui axialement sur l'arbre d'entrée 56 pour le serrer axialement contre le tourillon 88 qui prend lui-même appui axialement sur un épaulement cylindrique 70a de l'arbre principal 70.

À son extrémité aval, l'arbre intermédiaire 90 porte la bague interne 50a du palier 50, ici à billes, dont la bague externe 50b est portée par le support de palier 60. Ce support 60 a une forme générale tronconique et est évasé axialement vers l'aval. Son extrémité aval de plus grand diamètre est fixée au carter intermédiaire 61.

Ce type de palier 50 est classiquement lubrifié et est situé dans une enceinte annulaire de lubrification qui est rendue étanche pour éviter toute fuite d'huile en particulier vers l'amont, dans la zone Z d'implantation de la machine électrique 62.

La machine 62 a une forme générale annulaire et comprend un rotor 62a et un stator 62b qui entoure le rotor 62a. Le rotor 62a a une forme générale cylindrique s'étendant autour de l'axe A et est relié à un organe annulaire 94 s'étendant également autour de l'axe A.

L'organe 94 présente en section axiale une forme générale en T ou C. L'organe 94 comprend une branche annulaire radiale 94a dont la périphérie interne est reliée à une branche cylindrique 94b. La périphérie externe de la branche radiale 94a est reliée au rotor 62a, et la branche cylindrique 94b comprend des cannelures internes 94c d'accouplement à des cannelures externes de l'arbre intermédiaire 90, et en particulier de son tronçon aval 90b.

L'extrémité aval de la branche cylindrique 94b est d'une part en appui axial sur un épaulement cylindrique 90d de l'arbre intermédiaire 90, et son extrémité amont est en appui axial vers l'amont sur l'extrémité aval du tourillon 88. Cette extrémité amont de la branche 94b coopère et en d'autre part avec la surface cylindrique 90e de centrage portée par l'arbre intermédiaire 90.

Un écrou 96 est serré axialement à l'extrémité amont de l'arbre intermédiaire 90 et prend appui axialement sur le tourillon 88 pour le solliciter axialement contre l'organe 94.

À son extrémité amont, l'arbre intermédiaire 90 porte une bague interne 98a d'un palier 98, ici à rouleaux, dont la bague externe 98b est portée par un autre support annulaire de palier 100. Ce support 100 a une forme générale tronconique et est évasé axialement vers l'amont. Son extrémité amont de plus grand diamètre est fixée au carter d'entrée 40.

Le stator 62b a également une forme générale cylindrique. Il comprend à son extrémité aval une bride annulaire 62ba de fixation de plusieurs brides dont une de la virole 108a. La bride 62ba du stator 62b est également fixée à une bride du support de palier 60.

La périphérie interne du support de palier 60 peut être équipée d'un système d'amortissement 104 à film d'huile, connu sous l'appellation anglo-saxonne *squeeze-film.*

Le palier 98 est classiquement lubrifié et est situé dans une enceinte annulaire de lubrification qui est rendue étanche pour éviter toute fuite d'huile en particulier vers l'aval, dans la zone Z d'implantation de la machine électrique 62.

Le stator 62b est relié par un câble électrique 107 à un circuit de commande, ce câble 107 passant ici à travers un bras tubulaire 110 du carter intermédiaire 61.

Comme dans le précédent mode de réalisation, la virole 64a qui s'étend, de préférence directement, autour du stator 62b, a sa surface radialement externe qui est balayée par le flux 36 et qui peut de plus avoir un profil aérodynamique, comme représenté dans le dessin. La virole 64a assure l'échange de calories par conduction thermique entre le stator 62b et le flux 36.

## Revendications

1. Turbomachine (10) d'aéronef, comportant un générateur de gaz (12) et une soufflante (14) disposée en amont du générateur de gaz et configurée pour générer un flux principal de gaz (F) dont une partie s'écoule dans une veine du générateur de gaz pour former un flux primaire (36), et dont une autre partie s'écoule dans une veine autour du générateur de gaz pour former un flux secondaire (38), le générateur de gaz comportant un corps basse pression (12a) qui comprend un rotor entraînant la soufflante par l'intermédiaire d'un réducteur (33), la turbomachine comportant en outre une machine électrique (62), **caractérisée en ce que** la machine électrique est montée coaxialement en aval du réducteur (33) et en amont d'un carter intermédiaire (61) et comprend un rotor (62a) entraîné en rotation par le rotor du corps basse pression, et un stator (62b) s'étendant autour du rotor de la machine électrique, ce stator (62b) étant entouré par une première virole annulaire (64a) qui est elle-même entourée par une seconde virole annulaire (64b), ces première et seconde viroles délimitant entre elles une portion de ladite veine d'écoulement du flux primaire (36), et la première virole annulaire étant configurée pour refroidir par conduction ledit stator du fait de son balayage par le flux primaire.

2. Turbomachine (10) selon la revendication 1, dans laquelle la machine électrique (62) est située en amont d'un compresseur basse pression (20) du corps basse pression (12a).

3. Turbomachine (10) selon la revendication 1, dans laquelle la machine électrique (62) est située en aval d'un compresseur basse pression (20) du corps basse pression (12a).

4. Turbomachine (10) selon la revendication 3, dans laquelle ladite première virole (64a) a une extrémité aval fixée ou reliée à des moyens (76) de guidage en rotation d'une rangée annulaire d'aubes à calage variable du compresseur basse pression (20).

5. Turbomachine (10) selon l'une des revendications 1 à 4, dans laquelle le stator (62b) est fixé à un premier support annulaire de palier (100, 60) qui s'étend au moins en partie radialement à l'intérieur du stator et qui définit avec ce dernier un espace annulaire de montage du rotor (62a).

6. Turbomachine (10) selon la revendication 5, dans laquelle le rotor (62a) est fixé ou est relié à la périphérie externe d'un organe annulaire (94) à section axiale de forme générale en T ou C, cet organe comportant une périphérie interne qui est accouplé au rotor du corps basse pression (12a) par un arbre intermédiaire (90) traversant axialement la machine électrique (62), au moins un palier (50, 98) étant monté entre ledit premier support de palier (100, 60) et la périphérie interne de l'organe, ou entre ledit premier support de palier et l'arbre intermédiaire.

7. Turbomachine (10) selon la revendication 6, dans laquelle la périphérie interne de l'organe (94) est serrée axialement contre un tourillon (88) du rotor du corps basse pression (12a), l'organe et le tourillon étant montés de manière adjacente sur ledit arbre intermédiaire (90) qui est guidé par au moins deux paliers (98, 50) dont le palier (98, 50) porté par ledit premier support de palier (100, 60), ainsi qu'un autre palier (50, 98) porté par un second support annulaire de palier (60, 100) fixé à un carter (40, 61).

8. Procédé d'assemblage modulaire d'une turbomachine (10) selon l'une des revendications précédentes, comprenant au moins une étape de montage d'un premier module comportant plusieurs éléments assemblés, sur un second module.

9. Procédé selon la revendication 8, la turbomachine étant telle que définie à la revendication 6 ou 7, comprenant les étapes consistant à :
(a) assembler la machine électrique (62), le premier support de palier (100, 60) et ledit organe (94), et
(b) monter cet assemblage et ledit tourillon (88) sur ledit arbre intermédiaire (90).

## Patentansprüche

1. Turbotriebwerk (10) eines Flugzeugs, umfassend einen Gasgenerator (12) und ein Gebläse (14), das stromaufwärts des Gasgenerators angeordnet ist und konfiguriert ist, um einen Hauptgasstrom (F) zu erzeugen, von dem ein Teil in einer Ader des Gasgenerators abströmt, um einen Primärstrom (36) zu erzeugen, und von dem ein anderer Teil in einer Ader um den Gasgenerator herum abströmt, um einen Sekundärstrom (38) zu erzeugen, wobei der Gasgenerator einen Niederdruckkörper (12a) umfasst, der einen Rotor umfasst, der das Gebläse mithilfe eines Getriebes (33) antreibt, wobei das Turbotriebwerk weiter eine elektrische Maschine (62) umfasst, **dadurch gekennzeichnet, dass** die elektrische Maschine koaxial stromabwärts des Getriebes (33) und stromaufwärts eines Zwischengehäuses (61) montiert ist und einen Rotor (62a), der von dem Rotor der Niederdruckkörpers in Drehung versetzt wird, und einen Stator (62b), der sich um den Rotor der elektrischen Maschine erstreckt, umfasst, wobei dieser Stator (62b) von einer ersten ringförmigen Halterung (64a) umgeben ist, die wiederum von einer zweiten ringförmigen Halterung (64b) umgeben ist, wobei diese erste und zweite Halterung untereinander einen Abschnitt der Strömungsader des Primärstroms (36) begrenzen, und die erste ringförmige Halterung konfiguriert ist, um den Stator aufgrund seiner Spülung durch den Primärstrom durch Leitung abzukühlen.

2. Turbotriebwerk (10) nach Anspruch 1, wobei die elektrische Maschine (62) stromaufwärts eines Niederdruckverdichters (20) des Niederdruckkörpers (12a) gelegen ist.

3. Turbotriebwerk (10) nach Anspruch 1, wobei die elektrische Maschine (62) stromabwärts eines Niederdruckverdichters (20) des Niederdruckkörpers (12a) gelegen ist.

4. Turbotriebwerk (10) nach Anspruch 3, wobei die erste Halterung (64a) ein an einem der Mittel (76) zur drehenden Führung einer ringförmigen Reihe von Schaufeln mit variabler Feststellposition des Niederdruckverdichters (20) befestigtes oder verbundenesEnde aufweist.

5. Turbotriebwerk (10) nach einem der Ansprüche 1 bis 4, wobei der Stator (62b) an einer ersten ringförmigen Lagerstütze (100, 60) befestigt ist, die sich zumindest teilweise radial im Inneren des Stators erstreckt und die mit diesem Letzteren einen ringförmigen Raum zur Montage des Rotors (62a) definiert.

6. Turbotriebwerk (10) nach Anspruch 5, wobei der Rotor (62a) im axialen Schnitt mit allgemeiner T- oder C-Form an dem Außenumfang eines ringförmigen Organs (94) befestigt ist oder verbunden ist, wobei dieses Organ einen Innenumfang umfasst, der über eine Zwischenwelle (90), die axial die elektrische Maschine (62) durchquert, an den Rotor des Niederdruckkörpers (12a) gekoppelt ist, wobei mindestens ein Lager (50, 98) zwischen der ersten Lagerstütze (100, 60) und dem Innenumfang des Organs, oder zwischen der ersten Lagerstütze und der Zwischenwelle montiert ist.

7. Turbotriebwerk (10) nach Anspruch 6, wobei der Innenumfang des Organs (94) axial gegen einen Zapfen (88) des Rotors des Niederdruckkörpers (12a) gedrückt ist, wobei das Organ und der Zapfen auf angrenzende Weise auf der Zwischenwelle (90) montiert sind, die von mindestens zwei Lagern (98, 50) geführt wird, darunter das von der ersten Lagerstütze (100, 60) getragene Lager (98, 50) sowie ein weiteres Lager (50, 98), das von einer zweiten ringförmigen Lagerstütze (60, 100) getragen wird, die an einem Gehäuse (40, 61) befestigt ist.

8. Verfahren zum modularen Zusammenbau eines Turbotriebwerks (10) nach einem der vorstehenden Ansprüche, umfassend mindestens einen Schritt zur Montage eines ersten Moduls, das mehrere zusammengebaute Elemente umfasst, auf einem zweiten Modul.

9. Verfahren nach Anspruch 8, wobei das Turbotriebwerk wie in Anspruch 6 oder 7 definiert ist, umfassend die Schritte, die aus Folgendem bestehen:
(a) Zusammenbauen der elektrischen Maschine (62), der ersten Lagerstütze (100, 60) und des Organs (94) und
(b) Montieren dieses Zusammenbaus und des Zapfens (88) auf der Zwischenwelle (90).

## Claims

1. An aircraft turbine engine (10) comprising a gas generator (12) and a fan (14) arranged upstream from the gas generator and configured to generate a main gas flow (F), one part of which flows into a duct of the gas generator to form a primary flow (36), and another part of which flows in a duct around the gas generator to form a secondary flow (38), the gas generator comprising a low-pressure body (12a) that comprises a rotor driving the fan, the turbine engine further comprising an electrical machine (62), **characterised in that** the electrical machine comprises a rotor (62a) rotated by the rotor of the low-pressure body, and a stator (62b) extending around the rotor of the electrical machine, this stator (62b) being surrounded by a first annular shroud (64a) which is itself surrounded by a second annular shroud (64b), these first and second shrouds delimiting between them a portion of said flow duct of the primary flow (36), and the first annular shroud being configured to cool by conduction said stator as a result of its sweep by the primary flow.

2. The turbine engine (10) according to claim 1, wherein the electrical machine (62) is located upstream of a low-pressure compressor (20) of the low-pressure body (12a).

3. The turbine engine (10) according to claim 1, wherein the electrical machine (62) is located downstream of a low-pressure compressor (20) of the low-pressure body (12a).

4. The turbine engine (10) according to claim 3, wherein said first shroud (64a) has a downstream end attached or connected to means (76) for guiding in rotation an annular row of variable pitch vanes of the low-pressure compressor (20).

5. The turbine engine (10) according to any of claims 1 to 4, wherein the stator (62b) is attached to a first annular bearing support (100, 60) which extends at least partially radially inwardly of the stator and which defines therewith an annular space for mounting the rotor (62a).

6. The turbine engine (10) according to claim 5, wherein the rotor (62a) is attached to or connected to the outer periphery of an annular member (94) of generally T or C shape axial section, this member comprising an inner periphery which is coupled to the rotor of the low-pressure body (12a) by an intermediate shaft (90) passing axially through the electrical machine (62), at least one bearing (50, 98) being mounted between said first bearing support (100, 60) and the inner periphery of the member, or between said first bearing support and the intermediate shaft.

7. The turbine engine (10) according to claim 6, wherein the inner periphery of the member (94) is clamped axially against a trunnion (88) of the rotor of the low-pressure body (12a), the member and the trunnion being mounted adjacently on said intermediate shaft (90) which is guided by at least two bearings (98, 50) the bearing (98, 50) of which carried by said first bearing support (100, 60), as well as another bearing (50, 98) carried by a second annular bearing support (60, 100) attached to a casing (40, 61).

8. A method of modular assembly of a turbine engine (10) according to any of the preceding claims, comprising at least one step of mounting a first module comprising a plurality of assembled elements, on a second module.

9. The method according to claim 8, the turbine engine being as defined in claim 6 or 7, comprising the steps of:
(a) assembling the electrical machine (62), the first bearing support (100, 60) and said member (94), and
(b) mounting said assembly and said trunnion (88) on said intermediate shaft (90).
